(19) Europäisches Patentamt
European Patent Office
Office européen des brevets

(11) Veröffentlichungsnummer: **0 012 716**
**B1**

(12) # EUROPÄISCHE PATENTSCHRIFT

(45) Veröffentlichungstag der Patentschrift: **15.06.83**

(51) Int. Cl.³: **C 09 B 62/085,** D 06 P 3/10, C 07 D 251/12

(21) Anmeldenummer: **79810164.8**

(22) Anmeldetag: **26.11.79**

(54) **Monochlortriazinfarbstoffe der Azopyrazolonreihe, deren Herstellung und Verwendung zum Färben und Bedrucken von Textilmaterial.**

(30) Priorität: **30.11.78 CH 12254/78**

(43) Veröffentlichungstag der Anmeldung: **25.06.80 Patentblatt 80/13**

(45) Bekanntmachung des Hinweises auf die Patenterteilung: **15.06.83 Patentblatt 83/24**

(84) Benannte Vertragsstaaten: **BE CH DE FR GB NL**

(56) Entgegenhaltungen:
**DE-C-959 748**
**GB-A-2 020 681**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Ruhlmann, Edmond, Dr., Rue de Buschwiller 1, F-68300 Saint-Louis (FR)**

**EP 0 012 716 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Monochlortriazinfarbstoffe der Azopyrazolonreihe, deren Herstellung und Verwendung zum Färben und Bedrucken von Textilmaterial

Gegenstand der Erfindung sind neue Azofarbstoffe der Formel

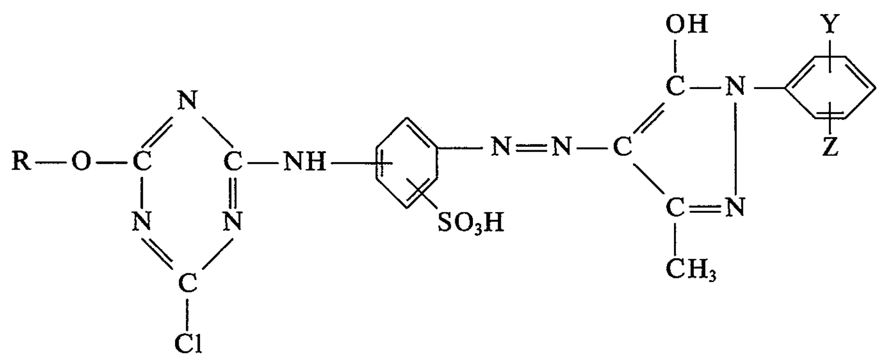
(1)

worin R $C_{1-4}$-Alkyl und Y und Z unabhängig voneinander Wasserstoff, $C_{1-4}$-Alkyl oder Halogen ist.

Der Alkylrest R kann geradkettig oder verzweigt sein. Der in 1-Stellung des Pyrazolonrestes befindliche Phenylrest kann Alkylgruppen mit 1 bis 4 Kohlenstoffatomen, wie Methyl, Äthyl, Propyl, Isopropyl oder Butyl und Halogenatome, wie Fluor, Chlor oder Brom enthalten.

Bevorzugt ist der Azofarbstoff der Formel

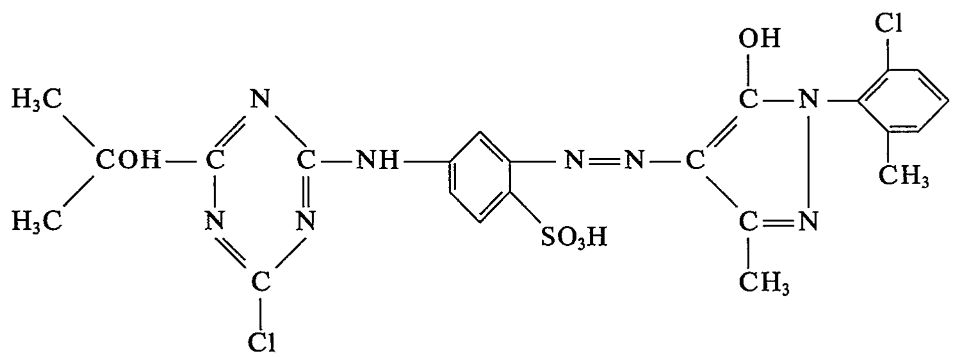
(2)

Gegenstand der Erfindung sind ferner die Azofarbstoffe der Formeln

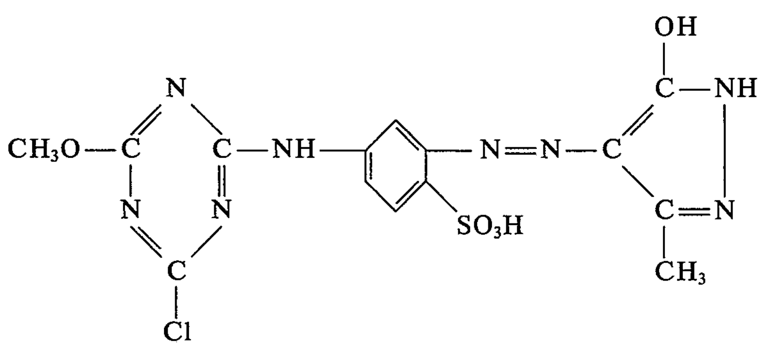
(3)

und

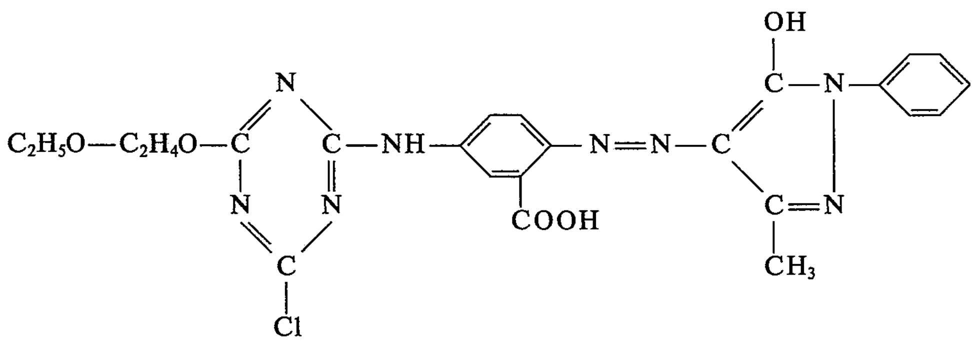
(4)

Die Herstellung der Azofarbstoffe der Formel (1) ist dadurch gekennzeichnet, daß man in beliebiger Folge Dichlor-s-triazine der Formel

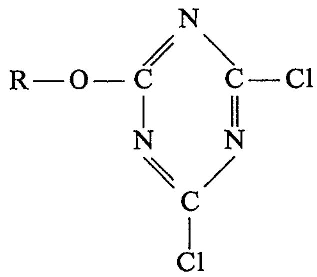

(5)

Phenylendiaminsulfonsäuren der Formel

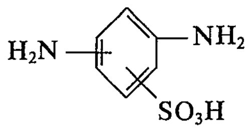

(6).

und Pyrazolone der Formel

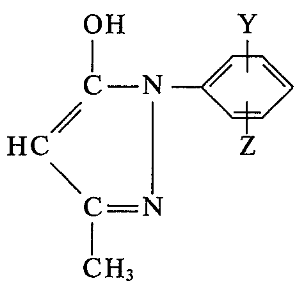

(7)

kondensiert, diazotiert und kuppelt, wobei die Symbole R, Y und Z in den Formeln (5) und (7) die unter Formel (1) angegebenen Bedeutungen haben.

Da die einzelnen oben angegebenen Verfahrensschritte, nämlich Kondensation, Diazotierung und Kupplung, in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten der Formeln (5) bis (7) frei gewählt werden kann.

Wichtige Verfahrensvarianten sind dadurch gekennzeichnet, daß man

1. ein Dichlor-s-triazin der Formel (5) mit einer Phenylendiaminsulfonsäure der Formel (6) kondensiert, das erhaltene Kondensationsprodukt diazotiert und auf ein Pyrazolon der Formel (7) kuppelt, oder
2. eine Phenylendiaminsulfonsäure der Formel (6) diazotiert und auf ein Pyrazolon der Formel (7) kuppelt und die erhaltene Azoverbindung mit einem Dichlor-s-triazin der Formel (5) kondensiert.

Die Herstellung der Azofarbstoffe der Formeln (3) und (4) erfolgt sinngemäß, wenn man entsprechende Ausgangsverbindungen verwendet.

Die bevorzugte Herstellungsweise der Azofarbstoffe der Formeln (2), (3) und (4) ist dadurch gekennzeichnet, daß man 2-Isopropoxy-4,6-dichlor-s-triazin mit 1,3-Phenylendiamin-4-sulfonsäure kondensiert, das erhaltene Kondensationsprodukt diazotiert und auf 1-(2'-Chlor-6'-methylphenyl)-3-methyl-5-pyrazolon kuppelt, oder indem man 2-Methoxy-4,6-dichlor-s-triazin mit 1,3-Phenylendiamin-4-sulfonsäure kondensiert, das erhaltene Kondensationsprodukt diazotiert und auf 3-Methyl-5-pyrazolon kuppelt, oder indem man 2-(2-Äthoxyäthoxy)-4,6-dichlor-s-triazin mit 2,5-Diaminobenzoesäure kondensiert, das erhaltene Kondensationsprodukt diazotiert und auf 1-Phenyl-3-methyl-5-pyrazolon kuppelt.

Die Diazotierung der Phenylendiaminsulfonsäuren der Formel (6) erfolgt in der Regel durch Einwirkung salpetriger Säure in wäßrig-mineralsaurer Lösung bei tiefer Temperatur, die Kupplung auf die Pyrazolone der Formel (7) bei schwach sauren, neutralen bis schwach alkalischen pH-Werten.

Die Kondensationen der Dichlor-s-triazine der Formel (5) mit den Phenylendiaminsulfonsäuren der Formel (6) erfolgen vorzugsweise in wäßriger Lösung oder Suspension, bei niedriger Temperatur und bei schwach saurem, neutralem bis schwach alkalischem pH-Wert. Vorteilhaft wird der bei der

Kondensation frei werdende Chlorwasserstoff laufend durch Zugabe wäßriger Alkalihydroxyde, -carbonate oder -bicarbonate neutralisiert.

In manchen Fällen verwendet man zweckmäßigerweise für die Kupplungen, bei welchen eine Diaminobenzolsulfonsäure als Diazokomponente der Formel (6) verwendet wird, nicht diese selbst, sondern statt dessen eine Amino-acylamino-benzolsulfonsäure, z. B. die 5-Acetylamino-anilin-2-sulfonsäure, aus der man nach vollzogener Kupplung die Acetylgruppe durch Verseifung abspaltet, bevor man weiterkondensiert. Ferner kann man als Diazokomponente der Formel (6) auch eine Nitro-aminoverbindung, z. B. 5-Nitro-anilin-2-sulfonsäure, verwenden und die Nitrogruppe nach der Kupplung mit Schwefelnatrium oder Natriumsulfhydrat zur Aminogruppe reduzieren.

Dichlor-s-triazine der Formel (5) sind bekannt. Sie werden hergestellt durch Kondensation des 2,4,6-Trichlor-s-triazins (Cyanurchlorids) im molaren Verhältnis 1 : 1 mit Alkoholen der Formel

R—OH (8),

worin R die unter Formel (1) angegebene Bedeutung hat. Die Kondensation erfolgt ebenso wie die Kondensation der Dichlor-s-triazine der Formel (5) mit den Phenylendiaminsulfonsäuren der Formel (6), vorzugsweise in wäßriger Lösung oder Suspension, bei niedriger Temperatur und bei schwach saurem, neutralem bis schwach alkalischem pH-Wert und in Gegenwart eines Chlorwasserstoff abspaltenden Mittels.

Als Ausgangsstoffe zur Herstellung der Azofarbstoffe der Formel (1) können beispielsweise genannt werden:

Dichlor-s-triazine der Formel (5)

4,6-Dichlor-2-methoxy-, -2-äthoxy-, -2-propyloxy-, -2-butyloxy-,
-2-(2-methyl-propyloxy)- und -2-tert.-butyloxy-s-triazin.

Phenylendiaminsulfonsäuren der Formel (6)

1,3-Diaminobenzol-4-sulfonsäure, 1,4-Diaminobenzol-2-sulfonsäure,
1-Amino-3-acetylaminobenzol-4-sulfonsäure (verseift),
1-Amino-4-acetylaminobenzol-2-sulfonsäure (verseift),
1-Amino-3-acetylaminobenzol-5- oder -6-sulfonsäure (verseift) und
1-Amino-4-nitrobenzol-2-sulfonsäure (reduziert).

Pyrazolone der Formel (7)

1-Phenyl-3-methyl-5-pyrazolon,
1-(2'- bzw. 3'- bzw. 4'-Chlorphenyl)-3-methyl-5-pyrazolon,
1-(2',5'-Dichlorphenyl)-3-methyl-5-pyrazolon,
1-(2'-Methylphenyl)-3-methyl-5-pyrazolon,
1-(2'-Äthylphenyl)-3-methyl-5-pyrazolon,
1-(2'-Methyl-6'-chlorphenyl)-3-methyl-5-pyrazolon,
1-(2'-Methyl-6'-äthylphenyl)-3-methyl-5-pyrazolon.

Die Verfahrensausführung zur Herstellung der Azofarbstoffe der Formeln (3) und (4) erfolgt singgemäß, wobei als Ausgangsstoffe

2-Methoxy-4,6-dichlor-s-triazin, 2-(2-Äthoxyäthoxy)-4,6-dichlor-s-triazin,
1,3-Phenylendiamin-4-sulfonsäure, 2,5-Diaminobenzoesäure,
3-Methyl-5-pyrazolon und 1-Phenyl-3-methyl-5-pyrazolon

verwendet werden.

Die Azofarbstoffe der Formeln (1) bis (4) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemittel und/oder Puffermitteln, z. B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe, herstellen.

Die Azofarbstoffe der Formeln (1) bis (4) sind neu. Sie ergeben Färbungen mit guten Naß- und

Lichtechtheiten. Besonders hervorzuheben ist es, daß die Farbstoffe eine gute Löslichkeit und Elektrolytlöslichkeit bei guten Ausziehеigenschaften und hoher Farbstoff-Fixierung aufweisen, und daß sich die nicht fixierten Anteile leicht entfernen lassen. Die Färbungen sind ätzbar.

Aus der DE-PS 959 748 ist ein ähnlicher Azofarbstoff bekannt, der sich dadurch von den erfindungsgemäßen Farbstoffen unterscheidet, daß der Chlortriazinrest den farblosen Substituenten Phenoxy enthält. Demgegenüber zeigen die erfindungsgemäßen Farbstoffe eine wesentlich bessere Wasserlöslichkeit und deutlich bessere Lichtechtheit.

Die Azofarbstoffe der Formeln (1) bis (4) eignen sich zum Färben und Bedrucken der verschiedensten Materialien, insbesondere aber von Seide, Wolle und Superpolyamidfasern. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird.

Sie eignen sich auch zum Bedrucken von stickstoffhaltigen Fasern, z. B. Wolle oder von Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

In den nachfolgenden Beispielen bedeuten die Teile Gewichtsteile, und die Temperaturen sind in Celsiusgraden angegeben.

Beispiel 1

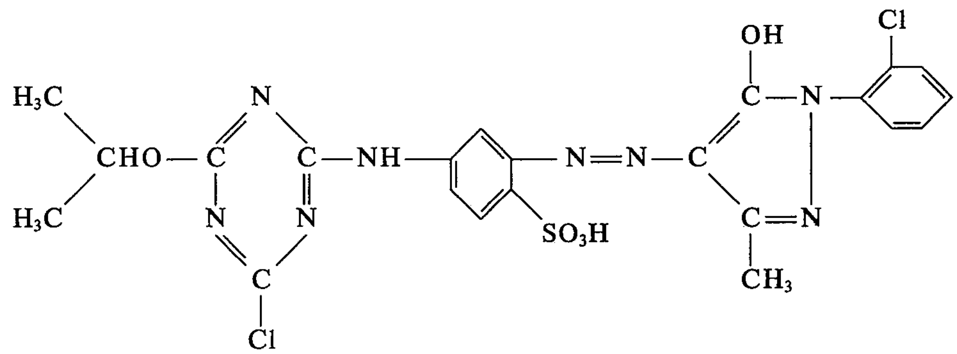

Zu einer neutralen Lösung von 18,8 Teilen 1,3-Phenylendiamin-4-sulfonsäure gibt man bei 10 bis 20° C innerhalb von 1/2 Stunde 24 Teile 2-Isopropoxy-4,6-dichlor-s-triazin, wobei man den pH-Wert durch Zutropfen von 30%iger Natronlauge auf 6 bis 7,5 hält. Die erhaltene Lösung des Reaktionsproduktes wird nach Verdünnen auf 500 Volumenteile mit 25 Teilen 30%iger Salzsäure angesäuert und mit 24 Volumenteilen 4n Na-Nitritlösung diazotiert. Die erhaltene schwach gelblich gefärbte Diazosuspension wird bei 10 bis 15° C allmählich mit einer Lösung von 18,9 Teilen 1-(2'-Chlor-phenyl)-3-methyl-5-pyrazolon in 200 Volumenteilen 0.5n-Natriumhydroxydlösung versetzt. Man rührt das Reaktionsgemisch 5 Stunden bei 10 bis 15° C und pH = 7,0. Der entstandene Farbstoff wird dann mit Natriumchlorid gefällt, abfiltriert und im Vakuum getrocknet. Der Farbstoff färbt Wolle und Fasern aus Polyamid in grünstichig gelben Tönen.

Verwendet man in dem obigen Beispiel anstelle von 2-Isopropoxy-4,6-dichlor-s-triazin äquivalente Mengen 2-Methoxy-4,6-dichlor-s-triazin, so erhält man Farbstoffe mit ähnlichen Eigenschaften.

Weitere Azofarbstoffe, welche Wolle und Polyamidfasern in gelben Tönen färben, erhält man, wenn man die Dichlor-s-triazine der Kolonne I der folgenden Tabelle nach den Angaben des Beispiels 1 mit 1,3-Phenylendiamin-4-sulfonsäure kondensiert und die erhaltenen Kondensationsprodukte mit den Pyrazolonen der Kolonne II kuppelt.

Tabelle 1

| | I Dichlor-s-triazine | II Pyrazolone |
|---|---|---|
| 1 | 2-Methoxy-4,6-dichlor-s-triazin | 3-Methyl-5-pyrazolon |
| 2 | 2-Äthoxy-4,6-dichlor-s-triazin | 1-Phenyl-3-methyl-5-pyrazolon |
| 3 | 2-Propyloxy-4,6-dichlor-s-triazin | 1-(2'-6'-Dimethylphenyl)-3-methyl-5-pyrazolon |
| 4 | 2-Methoxy-4,6-dichlor-s-triazin | 1-Phenyl-3-methyl-5-pyrazolon |
| 5 | 2-Butyloxy-4,6-dichlor-s-triazin | 1-(2'-Methylphenyl)-3-methyl-5-pyrazolon |
| 6 | 2-Isopropoxy-4,6-dichlor-s-triazin | 1-Phenyl-3-methyl-5-pyrazolon |
| 7 | 2-Isopropoxy-4,6-dichlor-s-triazin | 1-(2'-Chlor-6'-methylphenyl)-3-methyl-5-pyrazolon |
| 8 | 2-Propyloxy-4,6-dichlor-s-triazin | 1-(2'-Äthyl-phenyl)-3-methyl-5-pyrazolon |
| 9 | 2-Isopropoxy-4,6-dichlor-s-triazin | 1-(2'-,5'-Dichlor-phenyl)-3-methyl-5-pyrazolon |

Weitere Azofarbstoffe, welche Wolle und Polyamidfasern in gelben Tönen färben, erhält man, wenn man die in der nachfolgenden Tabelle genannten Dichlor-s-triazine der Kolonne I, Arylendiamine der Kolonne II und Pyrazolone der Kolonne III nach dem in Beispiel 1 angegebenen Verfahren miteinander umsetzt.

Tabelle 2

| | I Dichlor-s-triazine | II Arylendiamine | III Pyrazolone |
|---|---|---|---|
| 1 | 2-Methoxy-4,6-dichlor-s-triazin | 1,4-Phenylendiamin-2-sulfonsäure | 1-(2'-Methyl-6'-äthylphenyl)-3-methyl-5-pyrazolon |
| 2 | 2-(2-Äthyloxy-äthoxy)-4,6-dichlor-s-triazin | 2,5-Diaminobenzoesäure | 1-Phenyl-3-methyl-5-pyrazolon |
| 3 | 2-Isopropoxy-4,6-dichlor-s-triazin | 1,4-Phenylendiamin-2-sulfonsäure | 1-(2'-Chlor-6'-methylphenyl)-3-methyl-5-pyrazolon |

Färbebeispiel 1

In ein Bad, welches in 500 Teilen Wasser 0,5 Teile Glaubersalz, 0,4 Volumenteile Essigsäure und 0,2 Teile Farbstoff gemäß Beispiel 7 enthält, geht man bei 40°C mit 10 Teilen Wollflanell ein. Man steigert die Temperatur innerhalb von 30 Minuten gleichmäßig bis zum Sieden und färbt den Wollflanell noch eine Stunde bei Siedetemperatur. Das gefärbte Gut wird hierauf gespült und wie üblich fertiggestellt. Man erhält eine sehr gleichmäßige, reine gelbe Färbung.

Verwendet man anstelle von Essigsäure die gleiche Menge Schwefelsäure und färbt wie im Beispiel angegeben, so erhält man eine gelbe Färbung mit denselben Eigenschaften.

Färbebeispiel 2

Man geht bei 40°C mit 10 Teilen eines synthetischen Polyamid-Gewebes in ein Färbebad ein, welches in 500 Teilen Wasser 0,40 Teile 40%ige Essigsäure, 0,25 Teile Sulfonat des Rizinolsäurebutylesters und 0,20 Teile Farbstoff gemäß Beispiel 7 enthält. Man steigert die Temperatur gleichmäßig innerhalb von 30 Minuten bis zum Siedepunkt und färbt noch eine Stunde bei schwachem Sieden. Das Gewebe wird hierauf gespült und getrocknet. Man erhält eine gleichmäßige, streifenfreie gelbe Färbung, welche eine gute Wasch- und Lichtechtheit aufweist.

**Patentansprüche**

1. Azofarbstoffe der Formel

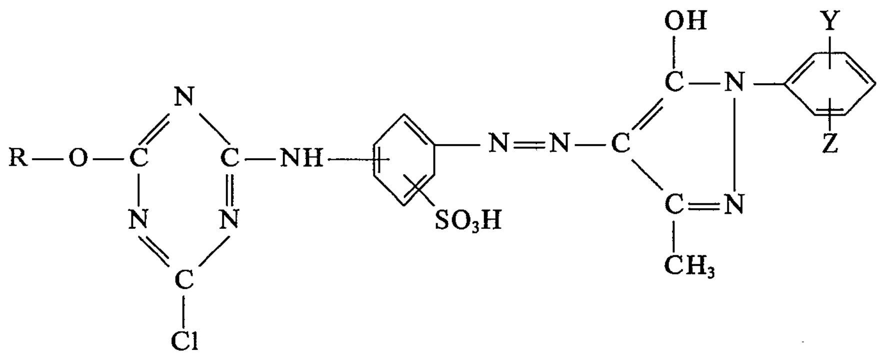

(1)

worin R $C_{1-4}$-Alkyl und Y und Z unabhängig voneinander Wasserstoff, $C_{1-4}$-Alkyl oder Halogen ist.

2. Der Azofarbstoff gemäß Anspruch 1, der Formel

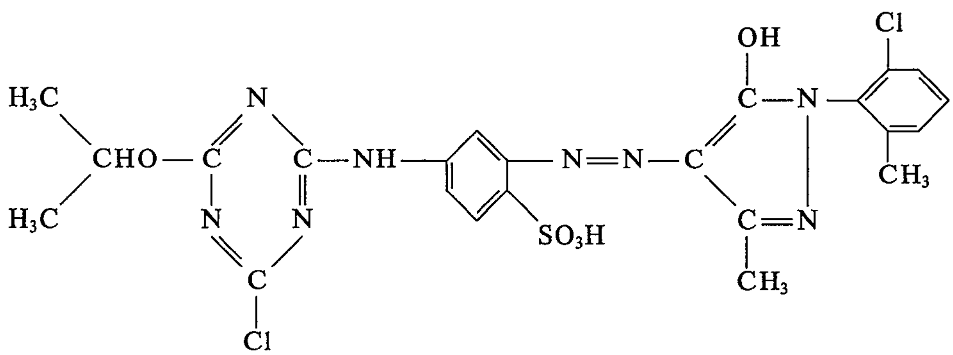

(2)

3. Der Azofarbstoff der Formel

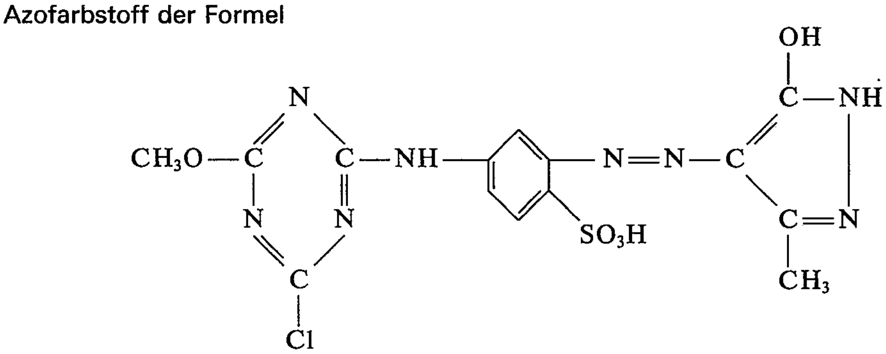

(3)

4. Der Azofarbstoff der Formel

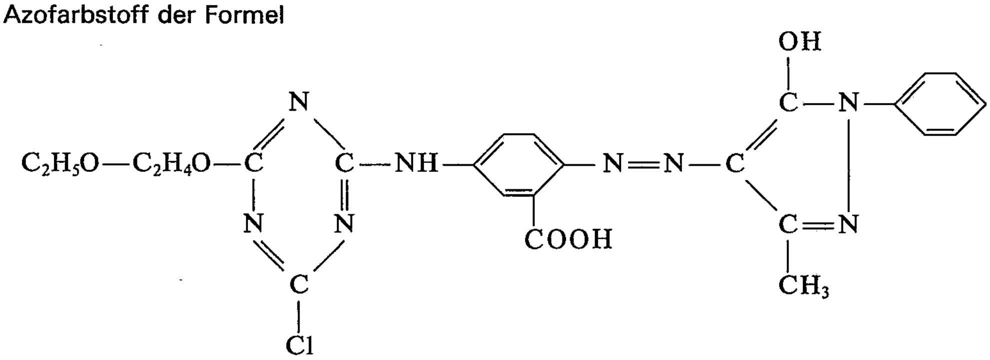

(4)

5. Verfahren zur Herstellung von Azofarbstoffen der Formel

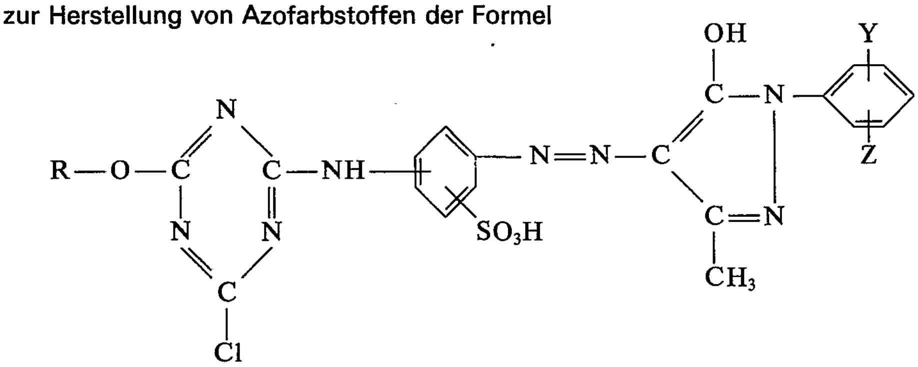

(1)

worin R $C_{1-4}$-Alkyl und Y und Z unabhängig voneinander Wasserstoff, $C_{1-4}$-Alkyl oder Halogen ist, dadurch gekennzeichnet, daß man in beliebiger Folge Dichlor-s-triazine der Formel

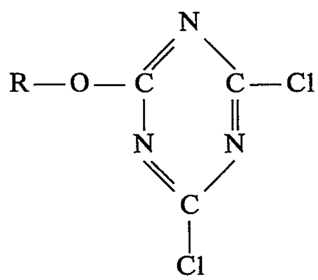

(5)

Phenylendiaminsulfonsäuren der Formel

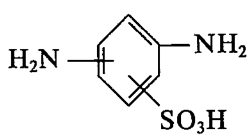

(6)

und Pyrazolone der Formel

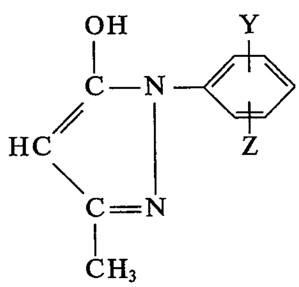

(7)

kondensiert, diazotiert und kuppelt, wobei die Symbole R, Y und Z in den Formeln (5) und (7) die unter Formel (1) angegebenen Bedeutungen haben.

6. Verfahren gemäß Anspruch 5, zur Herstellung des Azofarbstoffes der Formel

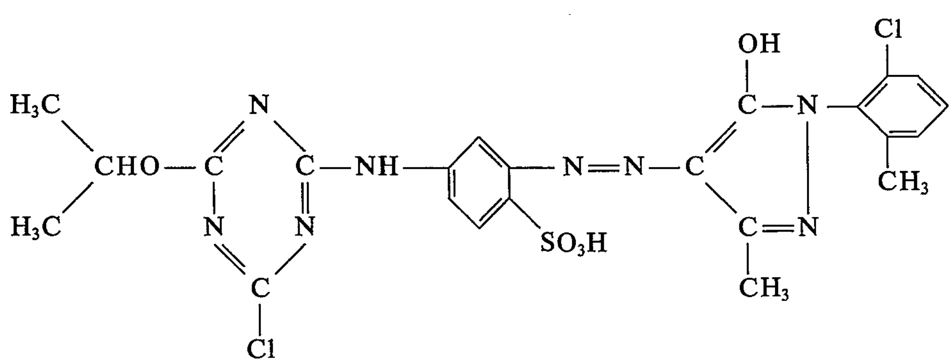

(2)

dadurch gekennzeichnet, daß man 2-Isopropoxy-4,6-dichlor-s-triazin mit 1,3-Phenylendiamin-4-sulfonsäure kondensiert, das erhaltene Kondensationsprodukt diazotiert und auf 1-(2'-Chlor-6'-methylphenyl)-3-methyl-5-pyrazolon kuppelt.

7. Verfahren zur Herstellung des Azofarbstoffes der Formel

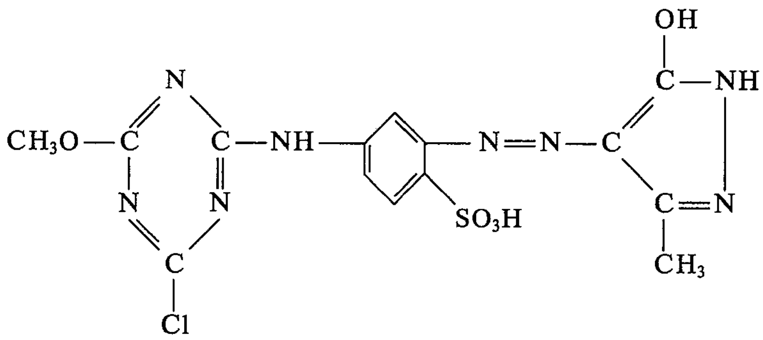

(3)

dadurch gekennzeichnet, daß man 2-Methoxy-4,6-dichlor-s-triazin mit 1,3-Phenylendiamin-4-sulfonsäure kondensiert, das erhaltene Kondensationsprodukt diazotiert und auf 3-Methyl-5-pyrazolon kuppelt.

8. Verfahren zur Herstellung des Azofarbstoffes der Formel

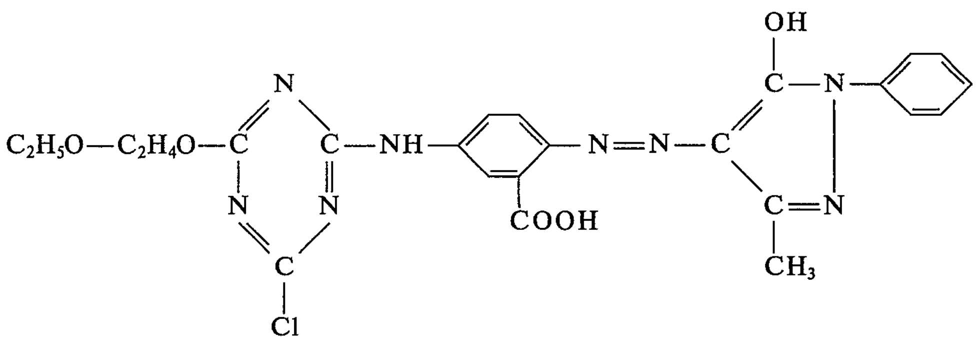

(4)

dadurch gekennzeichnet, daß man 2-(2-Äthoxy-äthoxy)-4,6-dichlor-s-triazin mit 2,5-Diaminobenzoesäure kondensiert, das erhaltene Kondensationsprodukt diazotiert und auf 1-Phenyl-3-methyl-5-pyrazolon kuppelt.

9. Die gemäß den Ansprüchen 5 bis 8 erhältlichen Azofarbstoffe.

10. Verfahren zum Färben und Bedrucken unter Verwendung der Azofarbstoffe gemäß den Ansprüchen 1 bis 4 bzw. der gemäß den Ansprüchen 5 bis 8 erhaltenen Azofarbstoffe.

11. Verfahren gemäß Anspruch 10, zum Färben von Wolle oder Polyamiden.

12. Färbe- und Druckpräparate, die Azofarbstoffe gemäß den Ansprüchen 1 bis 4 enthalten.

13. Das gemäß Anspruch 10 oder 11 gefärbte oder bedruckte Material, insbesondere das Textilmaterial.

**Claims**

1. An azo dye of the formula

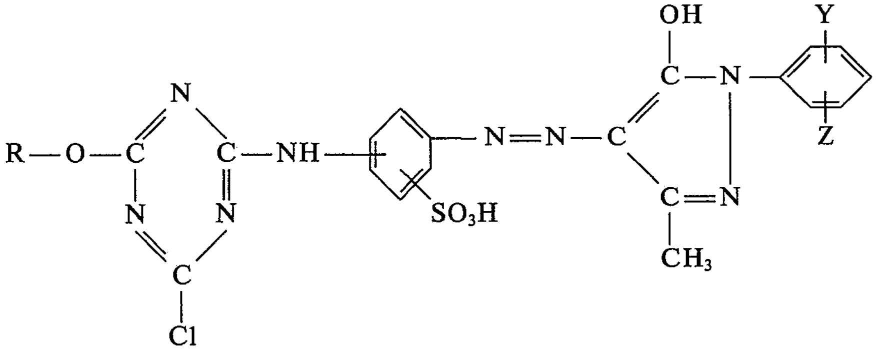

(1)

wherein R is $C_{1-4}$-alkyl and each of Y and Z independently of the other is hydrogen, $C_{1-4}$-alkyl or halogen.

2. The azo dye according to claim 1 of the formula

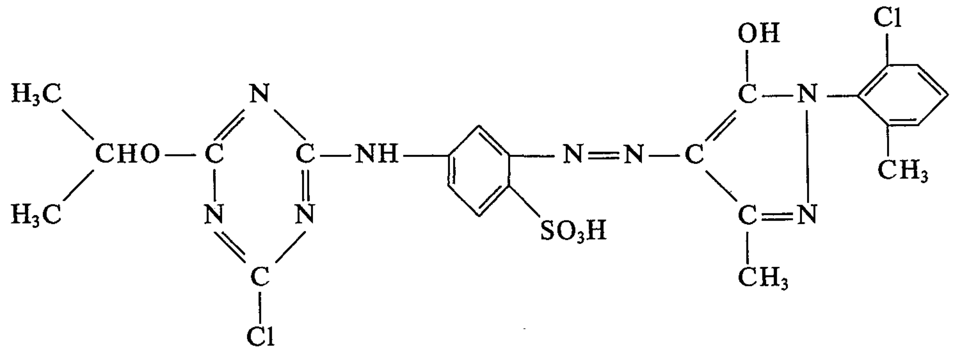

(2)

3. The azo dye of the formula

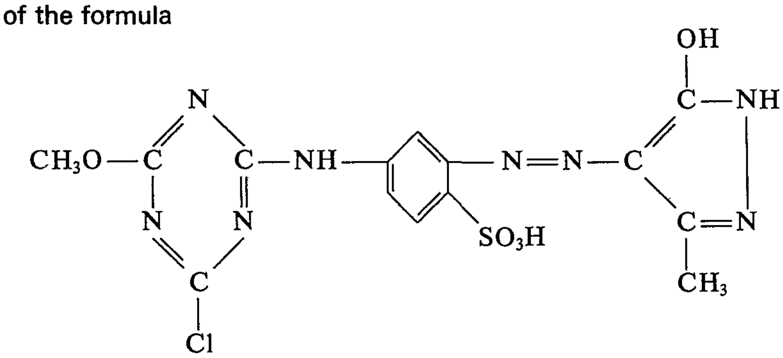

(3)

4. The azo dye of the formula

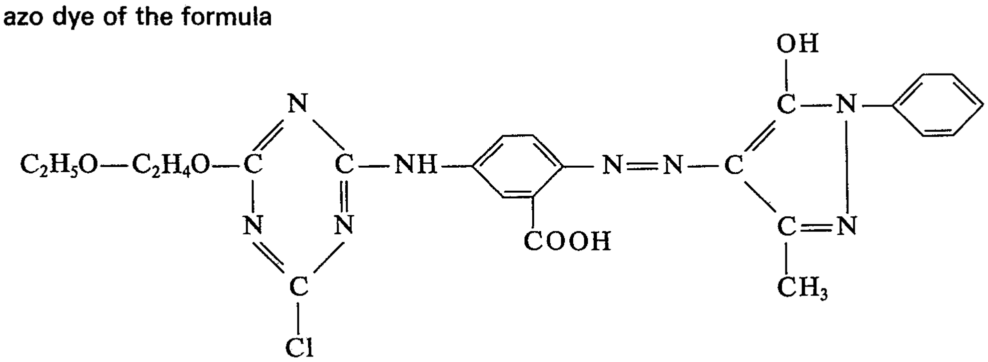

(4)

5. A process for the preparation of an azo dye of the formula

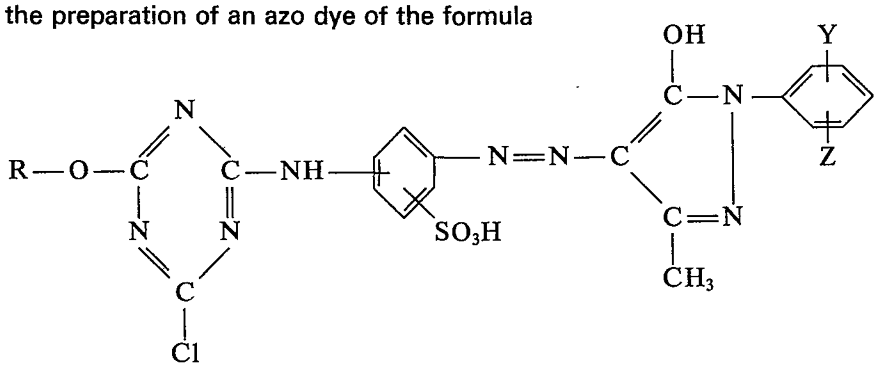

(1)

in which R is $C_{1-4}$-alkyl and each of Y and Z independently of the other is hydrogen, $C_{1-4}$-alkyl or halogen, which process comprises condensing, diazotising and coupling, in any order, a dichloro-s-triazine of the formula

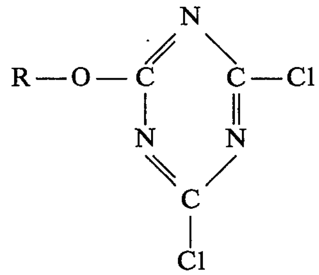

(5)

a phenylenediaminesulfonic acid of the formula

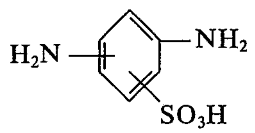

(6)

and a pyrazolone of the formula

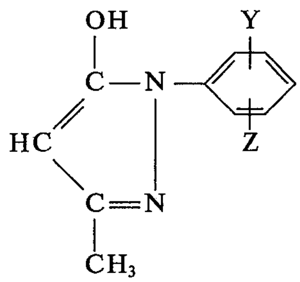

(7)

the symbols R, Y and Z in the formula (5) and (7) being as defined for formula (1).

6. A process according to claim 5 for the preparation of the azo dye of the formula

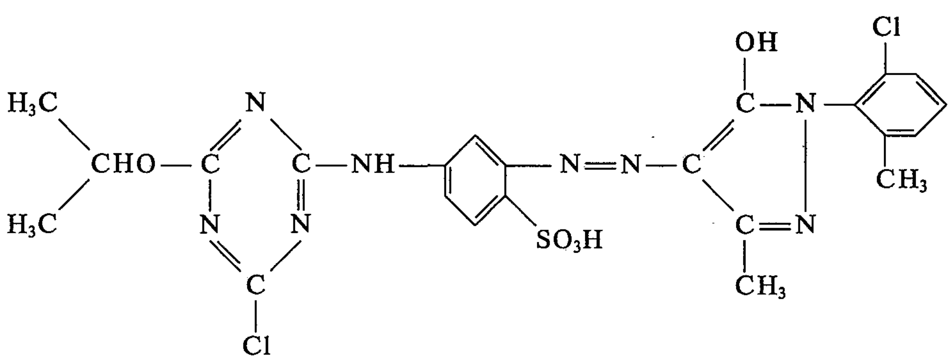

(2)

which process comprises condensing 2-isopropoxy-4,6-dichloro-s-triazine with 1,3-phenylenediamine-4-sulfonic acid, diazotising the condensation product so obtained and coupling the diazo compound to 1-(2′-chloro-6′-methylphenyl)-3-methyl-5-pyrazolone.

7. A process for the preparation of the azo dye of the formula

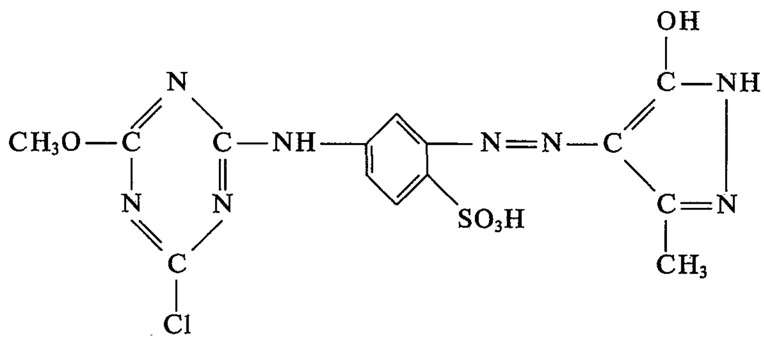

(3)

which comprises condensing 2-methoxy-4,6-dichloro-s-triazine with 1,3-phenylenediamine-4-sulfonic acid, diazotising the condensation product so obtained, and coupling the diazo compound to 3-methyl-5-pyrazolone.

8. A process for the preparation of the azo dye of the formula

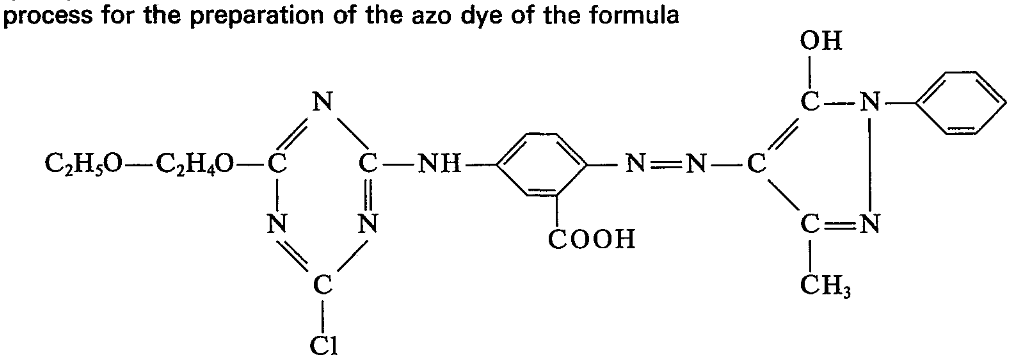

(4)

which comprises condensing 2-(2-ethoxyethoxy)-4,6-dichloro-s-triazine with 2,4-diaminobenzoic acid, diazotising the condensation product to obtained, and coupling the diazo compound to 1-phenyl-3-methyl-5-pyrazolone.

9. An azo dye obtainable according to any one of claims 5 to 8.

10. A process for dyeing or printing which comprises using an azo dye according to any one of claims 1 to 4 or an azo dye obtained according to any one of claims 5 to 8.

11. A process according to claim 10 for dyeing wool or polyamides.

12. A dyeing or printing preparation which contains an azo dye according to any one of claims 1 to 4.

13. The material, especially textile material, dyed or printed according to either of claims 10 ot 11.

**Revendications**

1. Colorants azoïques de formule:

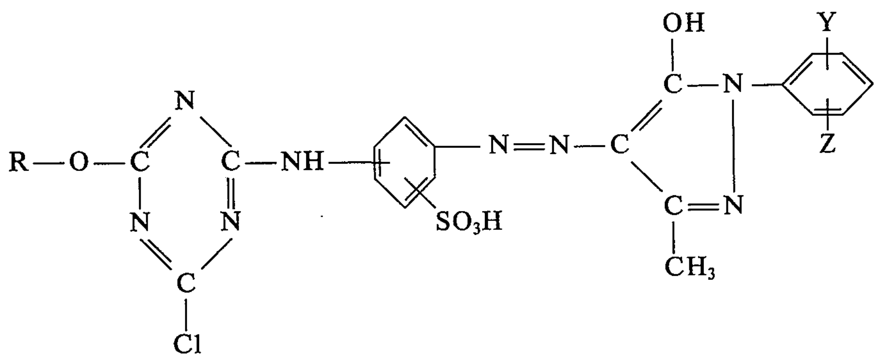

(1)

dans laquelle R est un groupe $C_{1-4}$-alkyle, et Y et Z indépendamment l'un de l'autre sont chacun de l'hydrogène, un groupe $C_{1-4}$-alkyle ou de l'halogène.

2. Colorant azoïque selon la revendication 1, ayant la formule:

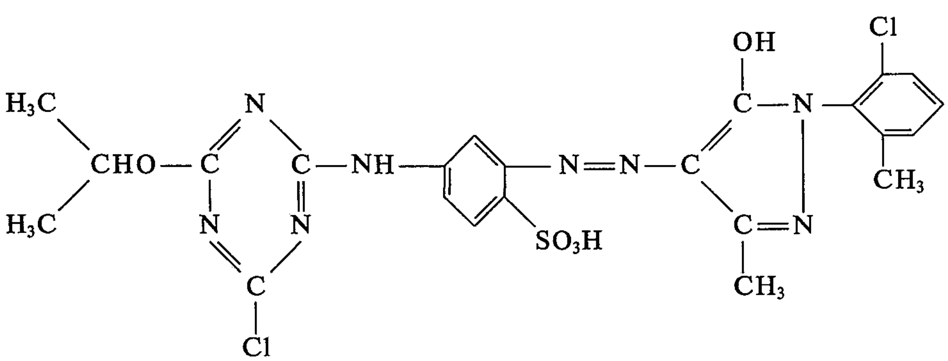

(2)

3. Colorant azoïque la formule

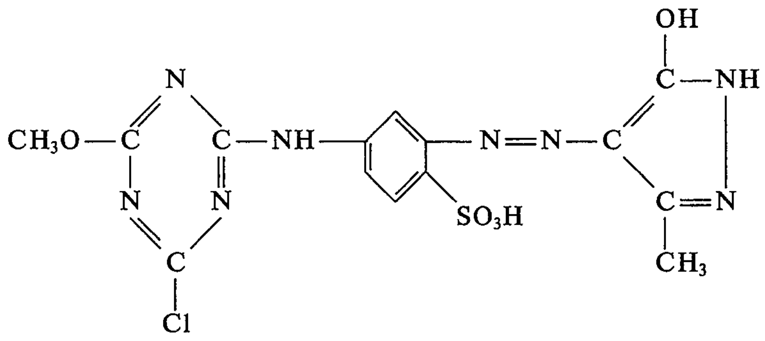

(3)

4. Colorant azoïque ayant la formule:

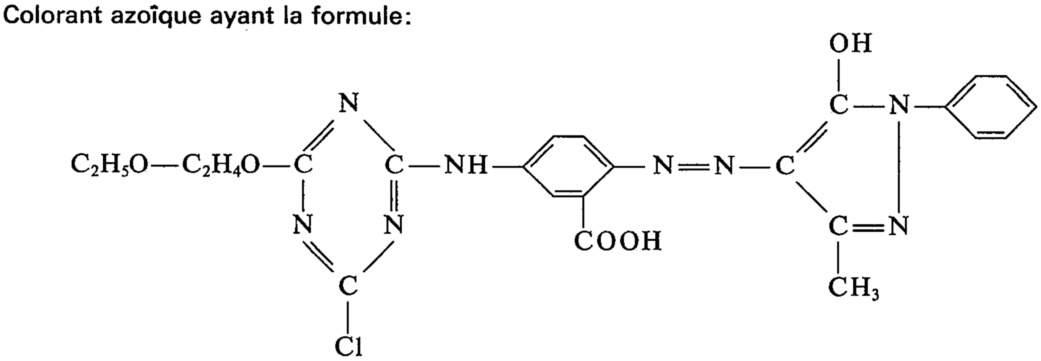

(4)

5. Procédé pour la préparation de colorants azoïques de formule:

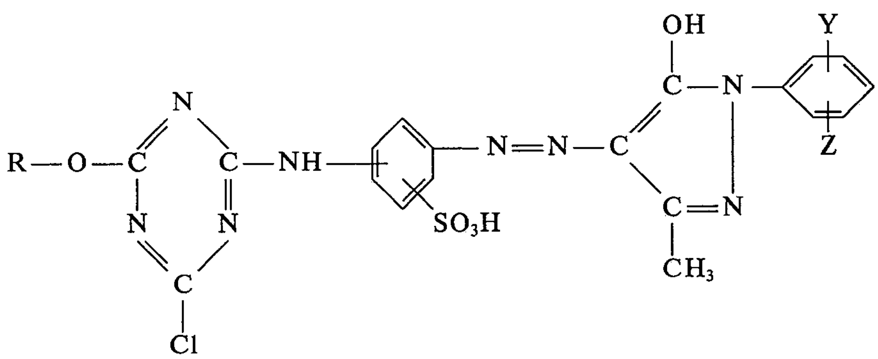

(1)

dans laquelle R est un groupe $C_{1-4}$-alkyle, et Y et Z indépendamment l'un de l'autre sont chacun de l'hydrogène, un groupe $C_{1-4}$-alkyle ou de l'halogène, caractérisé par le fait qu'on condense, diazote et copule dans un ordre quelconque des dichloro-s-triazines de formule:

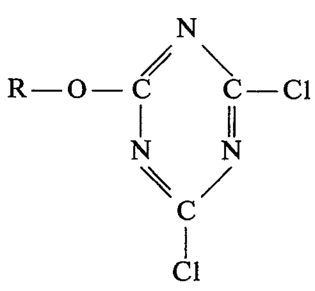

(5)

des acides phénylènediaminesulfoniques de formule:

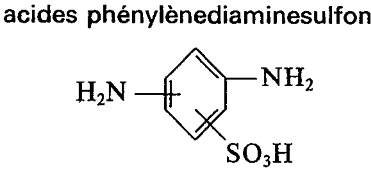

(6)

et des pyrazolones de formule:

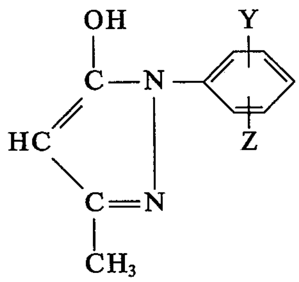

(7)

les symboles R, Y et Z dans les formules (5) et (7) ayant les significations données sous la formule (1).

6. Procédé selon la revendication 5, pour la préparation du colorant azoïque de formule:

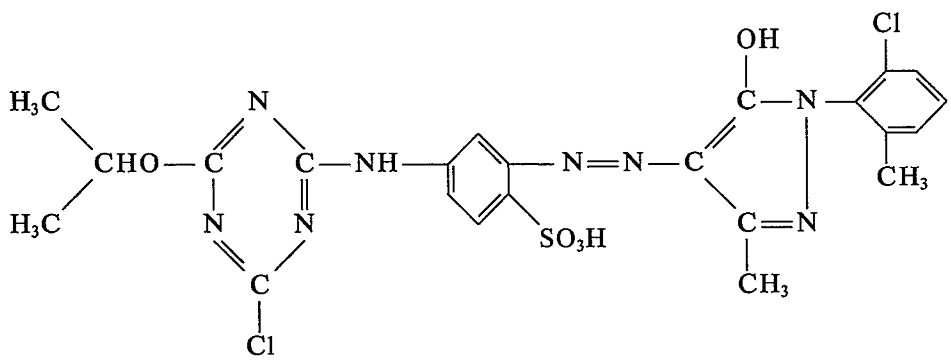

(2)

caractérisé par le fait qu'on condense la 2-isopropoxy-4,6-dichloro-s-triazine avec l'acide 1,3-phénylènediamine-4-sulfonique, qu'on diazote le produit de condensation obtenu et qu'on copule le diazo sur la 1-(2'-chloro-6'-méthylphényl)-3-méthyl-5-pyrazolone.

7. Procédé pour la préparation du colorant azoïque de formule:

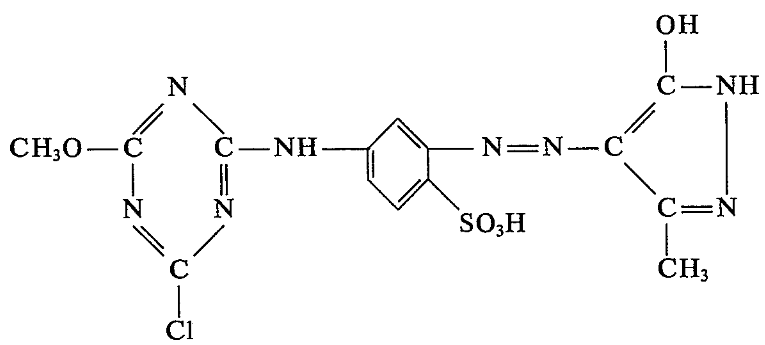

(3)

caractérisé par le fait qu'on condense la 2-méthoxy-4,6-dichloro-s-triazine avec l'acide 1,3-phénylènediamine-4-sulfonique, qu'on diazote le produit de condensation obtenu et qu'on copule le diazo sur la 3-méthyl-5-pyrazolone.

8. Procédé pour la préparation du colorant azoïque de formule:

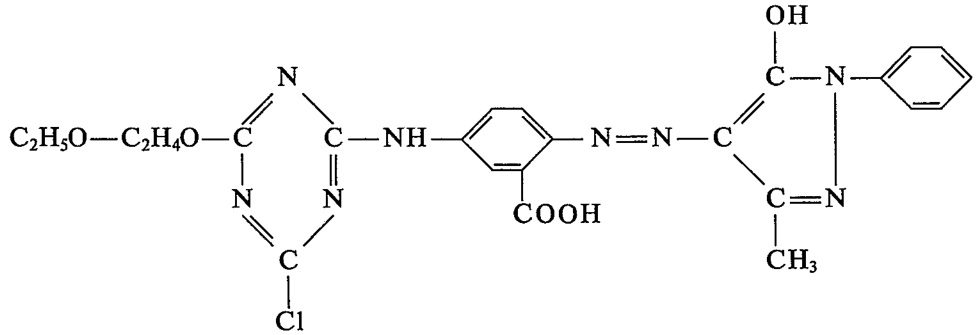

(4)

caractérisé par le fait qu'on condense la 2-(2-éthoxy-éthoxy)-4,6-dichloro-s-triazine avec l'acide

2,5-diaminobenzoïque, qu'on diazote le produit de condensation obtenu et qu'on copule le diazo sur la 1-phényl-3-méthyl-5-pyrazolone.

9. Les colorants azoïques obtenus selon les revendications 5 à 8.

10. Procédé pour la teinture et l'impression en utilisant les colorants azoïques selon les revendications 1 à 4, ou les colrants azoïques obtenus selon les revendications 5 à 8.

11. Procédé selon la revendication 10, pour la teinture de la laine et des polyamides.

12. Préparations tinctoriales et pour impression, qui contiennent les colorants azoïques selon les revendications 1 à 4.

13. La matière teinte ou imprimée selon les revendications 10 ou 11, en particulier la matière textile.